# EUROPEAN PATENT APPLICATION

(11) **EP 0 939 366 A2**
(43) Date of publication of application: **01.09.1999**
(21) Application number: 99103690.6
(22) Date of filing: 25.02.1999
(51) Int. Cl.: G06F 9/44

(54) **Programming supporting method and programming support device**

(30) Priority: 26.02.1998 JP 4565598
(71) Applicant: NEC CORPORATION, Tokyo (JP)
(72) Inventor: Toru, Aoyama, c/o NEC IC Microcomputer Systems, Lt, Kawasaki-shi, Kanagawa (JP)
(74) Representative: VOSSIUS & PARTNER

(57) **Abstract**

In a programming supporting method in which based on a dependence file indicative of dependence of a plurality of divisional source programs, said plurality of source program are handled as a series of programs, a description for the registration of a function of a function definition part in all of said plurality of source programs is extracted according to said dependence file, the extracted description is converted into a description in a prototype declaration format to generate an external prototype declaration definition file, a function having a return value is sequentially extracted from among functions described in the external prototype declaration definition file, a function of the same name as that of the extracted function is detected from a calling part of said function in said plurality of source programs according to the dependence file, and a type of return value of the detected function and a type of variable which stores a return value are estimated.

## Description

The present invention relates to a programming supporting method and a device therefor and, more particularly, to a programming supporting method for the case where prototype declarations in C language are created using an editor and a programming support device therefor.

At the time of computer-programming, it is a conventional practice to divide a program to be prepared into a plurality of modules in order to allow a plurality of programmers to share the work and to enhance maintenance and work efficiency of the program.

Division of a program into a plurality of modules may result in having a function definition part and a function calling part existing in different modules.

A function definition part and a function calling part existing in the same module enable a program translating device such as a compiler to directly translate the function calling part from the function definition part. In addition, comparison between the function calling part and the function definition part enables mismatch in a type of return value of a function, the number of arguments and types of arguments to be found with ease.

When the function definition part and the function calling part exist separately in different modules, however, directly searching the function definition part from the function calling part requires numbers of procedures and is therefore impractical.

C language, one of programming languages widely used in recent years, adopts prototype declarations as a means of linking a function calling part and a function definition part which separately exist in a plurality of modules.

In prototype declaration used in C language, a line of the same description as that of a function definition line of a function definition part is inserted into the head of a module which includes the function definition part and into the head of a module which includes a function calling part. The function definition line here represents a description line where a type of function, a name of the function, types of a plurality of arguments and argument names are described, while a line of the same description represents a description line where the same type and the same name of function as those of the function calling part and the same number of arguments in the same line are described.

It is also a common practice to prepare a file for prototype declaration definition which collects prototype declaration lines and declare at the top of each module such that this external prototype declaration definition file is taken in by a program translating device such as a compiler in accordance with a preprocessor control instruction "include". In other words, describing prototype declaration enables a program translating device such as a compiler to translate even when a function definition part and a function calling part exist in different modules.

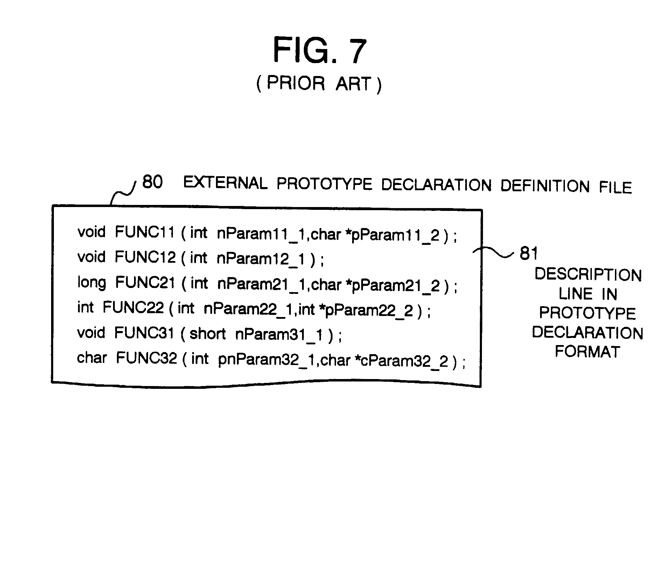

One example of a program file in a conventional programming supporting method recited in Japanese Patent Laying-Open (Kokai) No. Heisei 7-200309 (Literature 1) is shown in Fig. 7. With reference to Fig. 7, illustrated as a program list is one example of the contents of an external prototype declaration definition file containing a prototype declaration line. An external prototype declaration definition file 80 illustrated in the figure has a prototype declaration line 81.

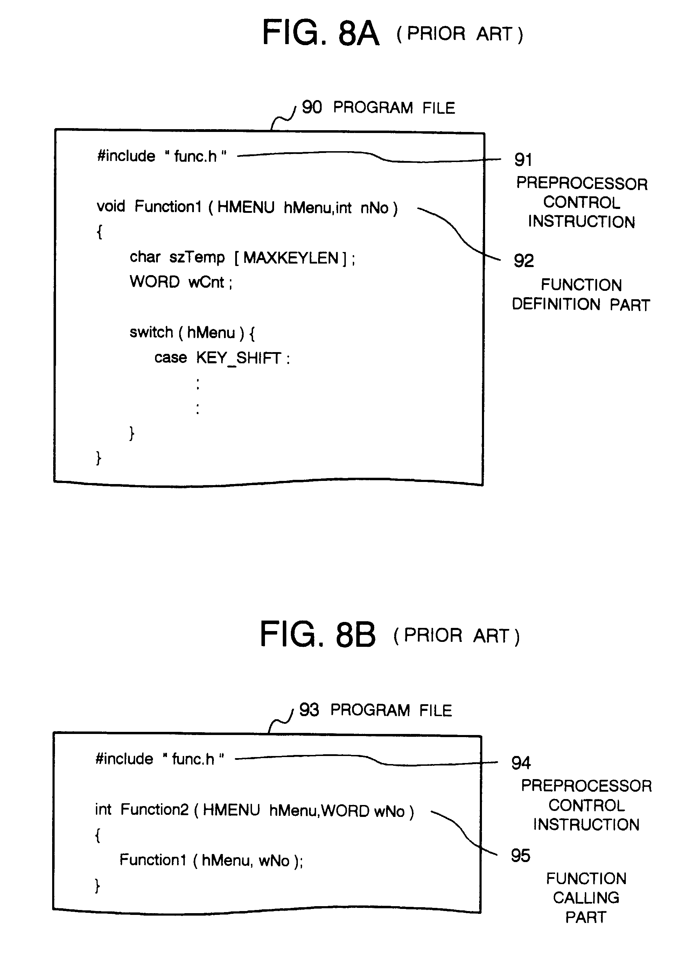

With reference to Fig. 8A and Fig. 8B showing one examples of the contents of a function definition part and a function calling part as program lists, respectively, a program file 90 illustrated in Fig. 8A contains a preprocessor control instruction 91 and a function definition part 92, while a program file 93 illustrated in Fig. 8B contains a preprocessor control instruction 94 and a function calling part 95.

The external prototype declaration definition file 80 is taken into and inline developed (read) in the program files 90 and 93 in accordance with the preprocessor control instructions 91 and 94, respectively, by a program translating device such as a compiler. Because the prototype declaration line 81 is read into (inline developed in) the program files 90 and 91, a program translating device such as a compiler is allowed to translate functions dispersedly existing in a plurality of program files. In this case, the prototype declaration line 81 should coincide with the function definition part 92 and the function calling part 95 in a type of return value of a function, the number of arguments of the function and types of arguments of the function.

As described above, in the prototype declaration in C language, a type of function registered (type of return value) and a type of argument used by the function are expressly declared to conduct optimization at the program translation. Here, as to the use of functions registered at a plurality of divisional program files and as to a type of registered function (type of return value) and a type of argument used by the function, matching with the side of a user (a party calling a function) is evaluated.

In other words, due to the characteristics of prototype declaration, it is necessary that a type of return value of a function and the number and types of arguments of the function definition part, a type of return value of a function and the number and types of arguments of the function calling part, and a type of return value of a function and the number and types of arguments of the prototype declaration should coincide with each other.

The first problem is that when any of a type of return value of a function and the number and types of arguments of a function definition part, a type of return value of a function and the number and types of arguments of a function calling part, and a type of return value of a function and the number and types of arguments of a prototype declaration is modified, there always arises the need of manual editing (change) by a programmer.

As to a function definition part and a function calling part, in general, it is very unlikely to forget modification or registration of either part in view of change of function specifications or addition of a new function. As to prototype declaration, although an inexperienced programmer of C language in particular conducts modification/registration of a function definition part and a function calling part, he or she is likely to forget modification or registration of a prototype declaration because it has no direct relationship with the modification/registration, resulting in deteriorating programming efficiency.

The second problem is as follows. As mentioned in the first problem, as to a function definition part and a function calling part, modification or registration of either part is unlikely to be forgotten in view of change of function specifications and addition of a new function. In a case, however, where in a function calling part, a variable exists which stores a return value of a function, if the return value of the function is changed, there arises the need of changing a type of variable which stores the return value of the function as well. Work of making these types the same should be done by a programmer him- or herself by modification. Besides, it is not until warning is output by a program translating device such as a compiler that the programmer realizes that he has made a mistake.

Although due to characteristics of prototype declaration, the above-described conventional programming supporting method and device therefor require a type of return value of a function and the number and types of arguments of a function definition part, a type of return value of a function and the number and types of arguments of a function calling part, and a type of return value of a function and the number and types of arguments of a prototype declaration to be the same, change of any of the above-described respective types always requires programmer's manual editing (change), which causes reduction of work efficiency.

In addition, when in a function calling part, a variable exists which stores a return value of a function, if the return value is changed, there arises the need of change of a type of variable which stores the return value of the function as well and the need of modification by a programmer him- or herself for making these types the same, resulting in that he or she is very highly likely to make a mistake.

A further drawback is that a programmer does not know that he or she has made a mistake until a program translating device such as a compiler outputs warning.

A first object of the present invention is to provide a programming supporting method with reduced load on a programmer and with high programming efficiency which enables automatic generation of a prototype declaration from a function definition part, that is, enables matching to be constantly maintained between the prototype declaration and the function definition part in a type of function (type of return value) and a type of argument which the function uses and enables pre-estimation of matching between a type of return value of a function and a type of variable which stores the return value of the function, and a programming support device therefor.

According to the first aspect of the invention, a programming supporting method in which based on a dependence file indicative of dependence of a plurality of divisional source programs, the plurality of source programs are handled as an equivalent to a series of programs, comprising the steps of
extracting a description for the registration of a function of a function definition part in all of the plurality of source programs according to the dependence file, and
converting the extracted description into a description in a prototype declaration format to generate an external prototype declaration definition file.

In the preferred construction, the programming supporting method further comprising the steps of
from among functions described in the external prototype declaration definition file, sequentially extracting a function having a return value, and detecting a function of the same name as that of the extracted function from a calling part of the function in the plurality of source programs according to the dependence file.

In another preferred construction, the file generation step including
a step of opening the first source program in the plurality of source programs,
a step of reading a description of the first source program line by line,
a function determination step of determining whether the read description corresponds to a function or not,
a function line extraction step of, when the read description corresponds to a function, extracting a function line in the source program,
a step of changing the extracted function line into a prototype declaration format, and
a step of registering the function changed into the prototype declaration format at the prototype declaration definition file.

In another preferred construction, the programming supporting method further comprising the steps of
reading a description of the external prototype declaration definition file line by line,
determining whether a function described in the read line has a return value or not,
when the determination is made that the function has a return value, searching the function calling part of the source program for a function of the same name as that of the function having the return value,
when a function of the same name exists, determining whether there exists a variable which stores a return value, and
when there exists a variable which stores a return value, estimating whether a type of return value of the function and a type of variable which stores the return value are the same or not.

In another preferred construction, the programming supporting method further comprising the steps of
reading a description of the external prototype declaration definition file line by line,
determining whether the read description corresponds to the last line or not,
when the description is not the last line, determining whether a function described in the read line has a return value or not,
when the determination is made that the function has a return value, reading the dependence file,
searching the function calling part of the source program for a function of the same name as that of the function having the return value according to the dependence file,
when a function of the same name exists, determining whether there exists a variable which stores a return value or not,
when there exists a variable which stores a return value, estimating whether a type of return value of the function and a type of variable which stores the return value are the same or not, and
giving warning when the estimation results in that the types are different.

In another preferred construction, the programming supporting method further comprising the steps of
from among functions described in the external prototype declaration definition file, sequentially extracting a function having a return value,
detecting a function of the same name as that of the extracted function from a calling part of the function in the plurality of source programs according to the dependence file, and
estimating a type of return value of the detected function and a type of variable which stores a return value.

According to the second aspect of the invention, a programming supporting device which handles, based on a dependence file indicative of dependence of a plurality of divisional source programs, the plurality of source programs as an equivalent to a series of programs, comprising
means for extracting a description for the registration of a function of a function definition part in all of the plurality of source programs according to the dependence file, and
means for converting the extracted description into a description in a prototype declaration format to generate an external prototype declaration definition file.

In the preferred construction, the programming supporting device further comprising
means for sequentially extracting, among functions described in the external prototype declaration definition file, a function having a return value, and
detecting a function of the same name as that of the extracted function from a calling part of the function in the plurality of source programs according to the dependence file.

In another preferred construction, the external prototype declaration definition file generation means
opens the first source program in the plurality of source programs,
reads a description of the first source program line by line,
determines whether the read description corresponds to a function or not,
when the read description corresponds to a function, extracts a function line in the source program,
changes the extracted function line into a prototype declaration format, and
registers the function changed into the prototype declaration format at the prototype declaration definition file.

In another preferred construction, the programming supporting device further comprising
means for reading a description of the external prototype declaration definition file line by line,
means for determining whether a function described in the read line has a return value or not,
means for searching, when the determination is made that the function has a return value, the function calling part of the source program for a function of the same name as that of the function having the return value,
means for determining, when a function of the same name exists, whether there exists a variable which stores a return value, and
means for estimating, when there exists a variable which stores a return value, whether a type of return value of the function and a type of variable which stores a return value are the same or not.

In another preferred construction, the programming supporting device further comprising
means for reading a description of the external prototype declaration definition file line by line,
means for determining whether the read description corresponds to the last line or not,
means for determining, when the description is not the last line, whether a function described in the read line has a return value or not,
means for reading the dependence file when the determination is made that the function has a return value,
means for searching the function calling part of the source program for a function of the same name as that of the function having the return value according to the dependence file,
means for determining, when a function of the same name exists, whether there exists a variable which stores a return value or not,
means for estimating, when there exists a variable which stores a return value, whether a type of return value of the function and a type of variable which stores the return value are the same or not, and
means for giving warning when the estimation results in that the types are different.

In another preferred construction, the programming supporting device further comprising
means for sequentially extracting, from among functions described in the external prototype declaration definition file, a function having a return value,
means for detecting a function of the same name as that of the extracted function from a calling part of the function in the plurality of source programs according to the dependence file, and
means for estimating a type of return value of the detected function and a type of variable which stores a return value.

According to another aspect of the invention, a computer readable memory storing a programming supporting program in which based on a dependence file indicative of dependence of a plurality of divisional source programs, the plurality of source programs are handled as an equivalent to a series of programs, the programming supporting program comprising the steps of
extracting a description for the registration of a function of a function definition part in all of the plurality of source programs according to the dependence file, and
converting the extracted description into a description in a prototype declaration format to generate an external prototype declaration definition file.

Other objects, features and advantages of the present invention will become clear from the detailed description given herebelow.

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing one embodiment of a programming support device of the present invention;
Fig. 2 is a block diagram showing a first embodiment for automatically generating an external prototype declaration definition file of the programming support device according to the present embodiment;
Fig. 3A is a program list showing one example of the contents of a dependence file of Fig. 1;
Fig. 3B is a program list showing one example of the contents of the dependence file of Fig. 1;
Fig. 4 is a flow chart showing operation of the first embodiment of the present embodiment;
Fig. 5 is a block diagram showing a second embodiment related to processing of the dependence file of the present embodiment;
Fig. 6 is a flow chart showing operation of the second embodiment of the present embodiment;
Fig. 7 is a program list showing one example of the contents of an external prototype declaration definition file in a conventional programming supporting method;
Fig. 8A is a program list showing one example of the contents of a function definition part and a function calling part;
Fig. 8B is a program list showing one example of the contents of the function definition part and the function calling part.

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

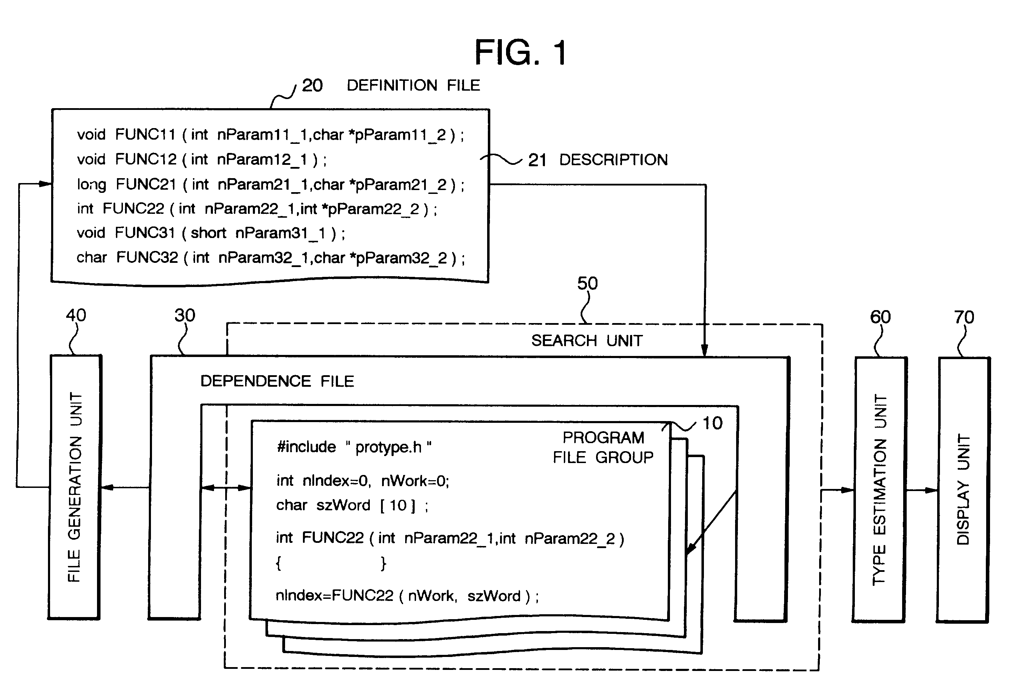

With reference to Fig. 1 illustrating the embodiment of the present invention as a block diagram, a programming support device which executes a programming supporting method of the present embodiment includes a program file group 10 divided into a plurality of parts, a definition file 20 for defining an external prototype declaration, a dependence file 30 indicative of dependence, a file generation unit 40 for automatically generating the definition file 20 from the program file group 10, a search unit 50 for searching a type of function and a type of variable which stores a return value of a function, a type estimation unit 60 for estimating a return value of a function and a variable which stores the return value of the function, and a display unit 70 for displaying a result to inform a programmer.

Next, operation of the present embodiment will be described with reference to Fig. 1.

First, the dependence file 30 indicative of dependence indicates that the group 10 of a plurality of divisional program files are ultimately combined into one program. Based on the dependence file 30, the file generation unit 40 generates the definition file 20.

The file generation unit 40 looks up a description for registering a function in every function definition part from the program file group 10 according to the dependence file 30 indicative of dependence of read program files and converts the description into a description 21 in a prototype declaration format to automatically generate the definition file 20. In other words, the definition file 20 is automatically generated from the program file group 10 by the file generation unit 40.

The search unit 50 looks up a function name having a return value (except that of void type) in the definition file 20 and search the program file group 10 for a function of the same name according to the dependence file 30.

The type estimation unit 60 estimates (compares) a type of return value of a function and a type of variable which stores the return value of the function from the search results obtained by the search unit 50 and when they differ from each other, notifies the programmer of the results through the display unit 70.

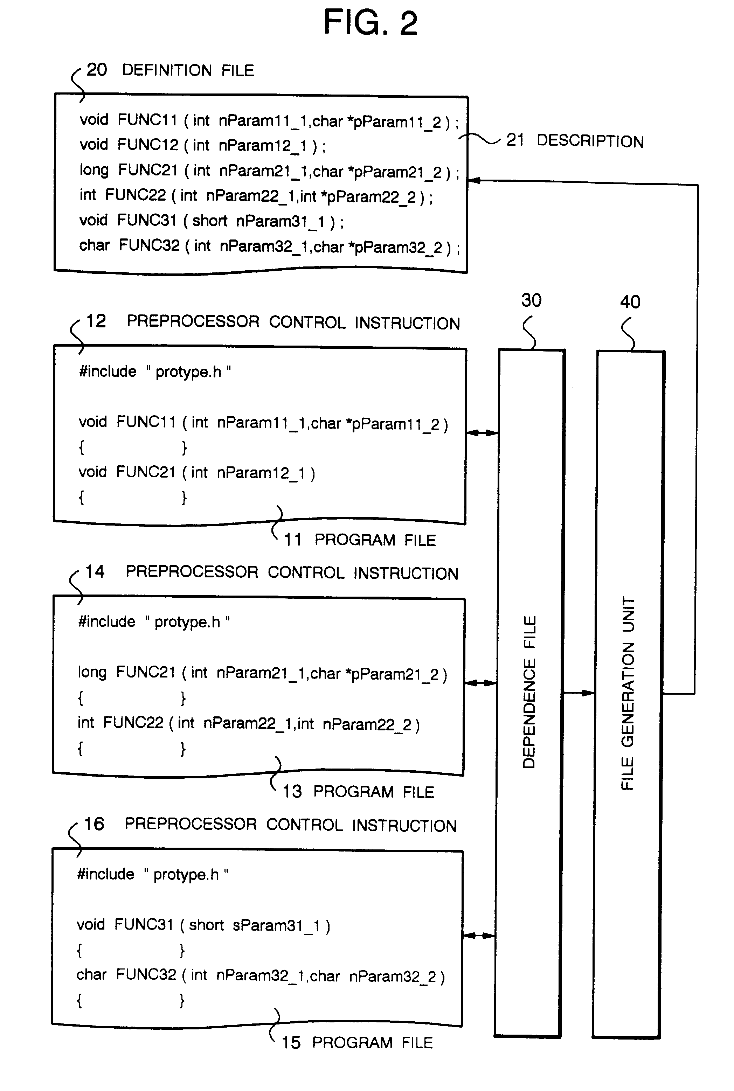

Next, with reference to Fig. 2 illustrating, as a block diagram, a first embodiment including the file generation unit 40 for automatically generating the definition file 20 for the external prototype declaration definition according to the present embodiment, operation of automatic generation of the definition file 20 will be described in detail.

A program file 11 is a program file in which registered are a function "FUNC11" having "int"-type and "char *"-type arguments and whose return value is of "void" type and a function "FUNC12" having an "int"-type argument and whose return value is of "void" type.

Similarly, a program file 13 is a program file in which registered are a function "FUNC21" having "int"-type and "char∗"-type arguments and whose return value is of "long" type and a function "FUNC22" having "int"-type and "int"-type arguments and whose return value is of "int" type.

Similarly, a program file 15 is a program file in which registered are a "FUNC31" having a "short"-type argument and whose return value is of "void" type and a function "FUNC32" having "int*"- and "char"-type arguments and whose return value is of "char" type.

The dependence file 30 of the program files indicates that the program file 11, the program file 13 and the program file 15 are ultimately combined into one total program and is read into the file generation unit 40 for automatically generating the definition file 20.

The file generation unit 40 looks up a description for the registration of a function in every function definition part from the program file 11, the program file 13 and the program file 15 according to the dependence file 30 indicative of dependence of read program files and converts the description into the description 21 of prototype declaration to automatically generate the definition file 20.

The definition file 20 is taken in in accordance with instructions 12, 14 and 16 ┌ #include protype.h"┘ by the preprocessor control lines in the plurality of program files 11, 13 and 15.

According to the above-described first embodiment, even if a description for the registration of a function of a function definition part in the program files 11, 13 and 15 is changed, the definition file 20 is automatically generated from a description for the registration of a function of a function definition part in the program files 11, 13 and 15 at any time. In other words, matching between descriptions for the registration of functions of function definition parts in the program files 11, 13 and 15 and the definition file 20 can be maintained at any time.

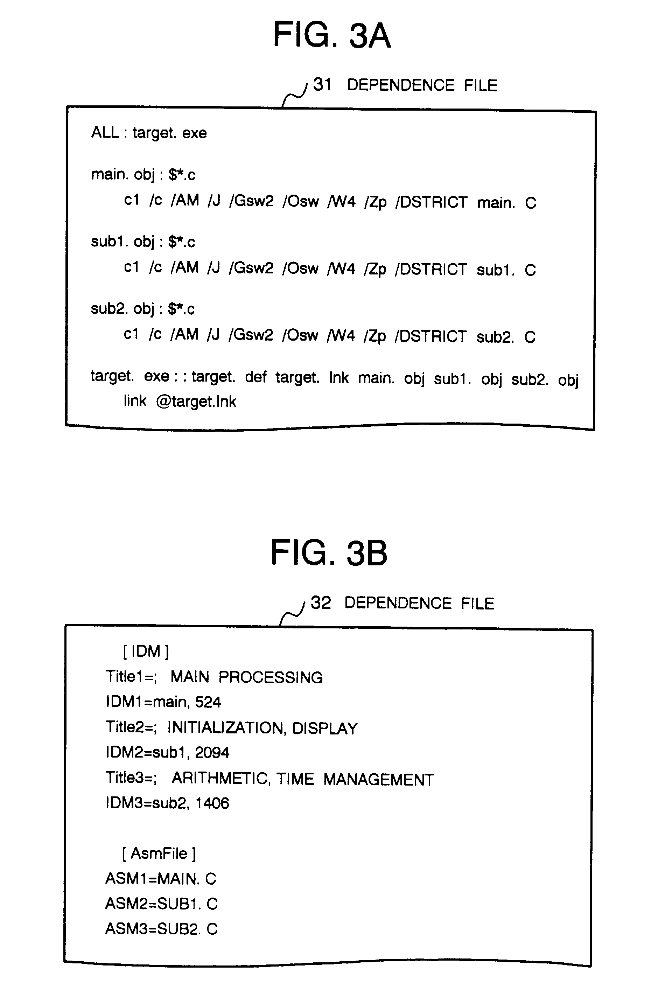

Figs. 3A and 3B each show an example of the dependence file 30 automatically generated by the file generation unit 40 from the program files 11, 13 and 15 illustrated in Fig. 2.

Dependence files 31 and 32 respectively illustrated in Figs. 3A and 3B are files each composed of a plurality of file descriptions whose combination generates a target execution file.

Described in the dependence file 31 is, for example, that target.exe is generated by combining main.c, subl.c, and sub2.c. The file illustrated here which represents dependence of program files is an example only and the same is also the case with a dependence file with other descriptions.

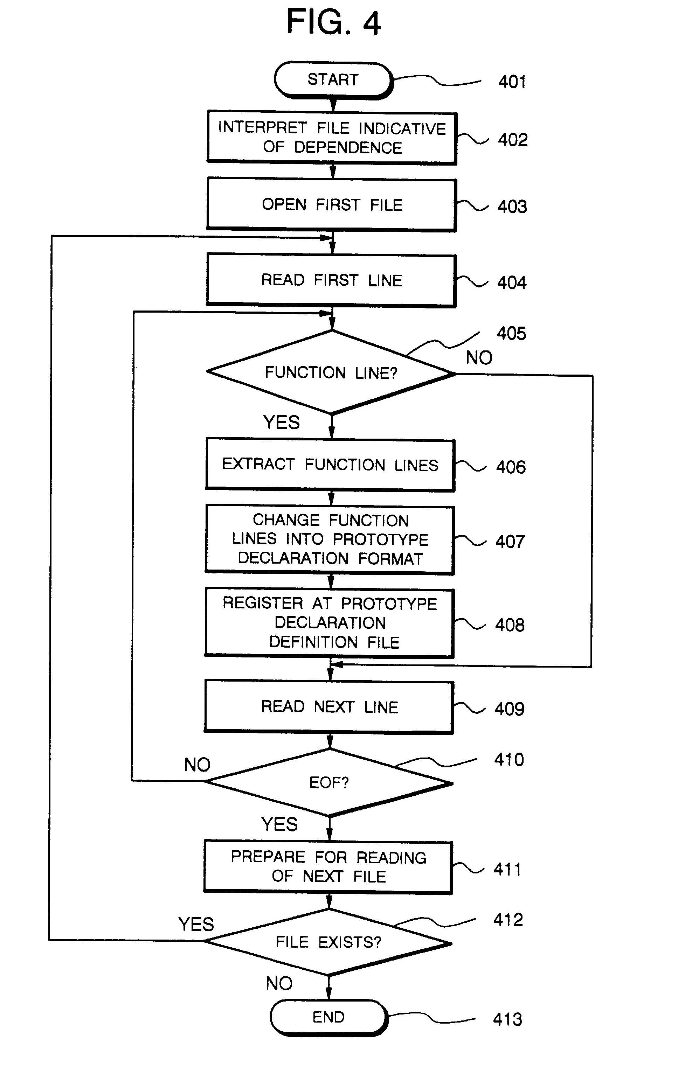

Description will be made of the processing of automatic generation of the definition file 20 of the file generation unit 40 for automatically generating the definition file 20 with reference to the flow chart of Fig. 4.

First, start operation at Step 401 to interpret the dependence file 30 of program files, thereby bringing all the program files 11, 13 and 15 having dependence with each other based on the dependence file 30 into a readable state file by file (Step 402).

Next, open a file described at the beginning of the dependence file 30 (Step 403) and read the first line of the file (Step 404).

Then, determine whether the contents of the read line correspond to a function line of C language or something else (Step 405). When the contents relate to a function line, extract all the function definition lines (Step 406), convert the extracted lines to the description 21 of the prototype declaration (Step 407), generate a new line in the definition file 20 and write the results of the conversion to the description 21 of the prototype declaration into the new line (Step 408).

When at Step 405, the contents correspond to other than a function line, none of the processing at Steps 406, 407 and 408 will be executed.

Furthermore, read the contents of the next line (Step 409) to make determination of the end of the file (EOF: End of File) (Step 410).

If it is not EOF, processing starting at Step 405 will be repeated. If it is EOF, prepare for the reading of the next file according to the dependence file 30 (Step 411) to determine whether there exists a file to be read next (Step 412).

If there exists a file to be read next, return to Step 404 to read the first line of the next file and repeat the above-described processing. On the other hand, if there exists no file to be read, finish the processing at Step 413.

The file generation unit 40 providing the above-described function can be realized as software to run on a workstation or a personal computer.

As described in the foregoing, it is possible to provide a programming supporting method with reduced load on a programmer and with high development efficiency which enables automatic generation of a prototype declaration from a function definition part to match a function definition part and a prototype declaration in a return value of a function, the number of arguments of a function and types of arguments of a function at any time.

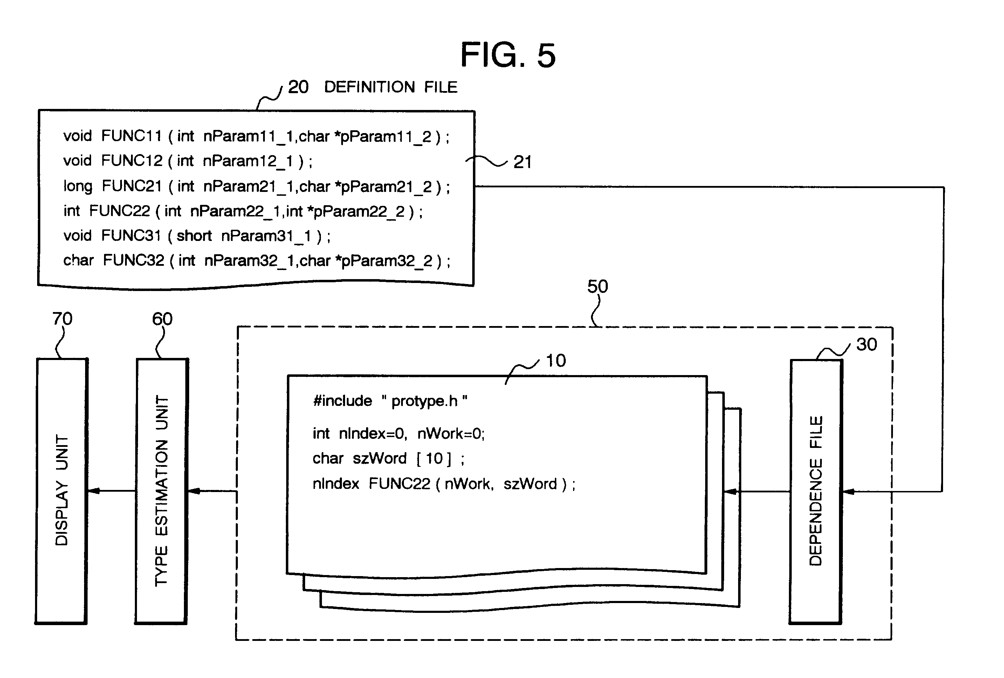

Next, with reference to Fig. 5, detailed description will be made of operation related to the processing of the dependence file 30 indicative of dependence by using the type estimation unit 60 for estimating a type of return value of a function and a type of variable which stores a return value of a function at the program support device according to the present embodiment.

The dependence file 30 indicates that the program file group 10 which is divided into a plurality of parts is ultimately combined into one program. The definition file 20 is an external prototype declaration definition file containing the description 21 in a prototype declaration format extracted from the program file group 10 as described above.

The search unit 50 sequentially extracts, from among functions described in the external prototype declaration definition file 20, a function having a return value.

Then, the unit 50 extracts a function with the same name as that of the function extracted from the definition file 20 from the program file group 10 according to the dependence file 30. At the extracted function calling part, examination is made whether for a variable which stores a return value of the function, the return value of the function is substituted or not. Also examined is a type of variable which stores the substituted return value.

Upon receiving the examination result obtained by the search unit 50 and finding that they are different, the type estimation unit 60 notifies the programmer of the information that they are different through the display unit 70.

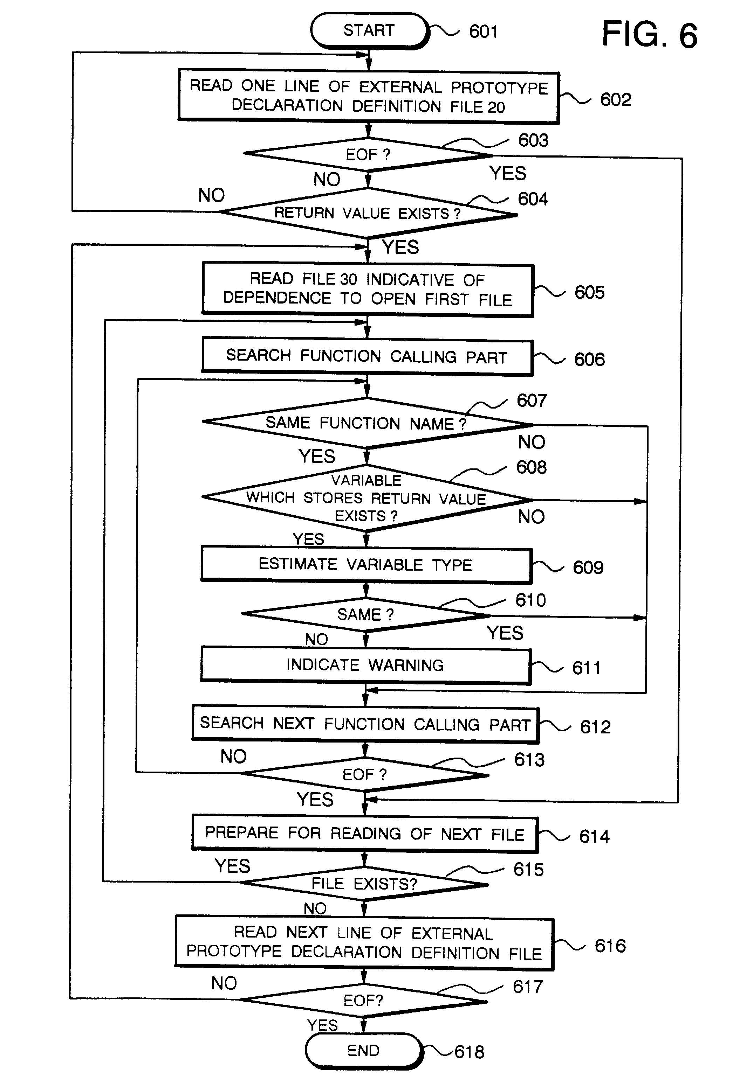

Processing of the dependence file 30 using the search unit 50 and the type estimation unit 60 for automatically generating the definition file 20 is shown in the flow chart of Fig. 6.

With reference to Fig. 6, description will be first made of processing operation of the dependence file 30. First, start the processing at Step 601 to read the first line of the definition file 20 (Step 602) and make determination of the end of file (EOF) (Step 603).

If it is not EOF, determination is made whether there exists a return value or not (Step 604). If it is EOF, skip Steps from 604 to 613. When no return value exists at Step 604, return to Step 602.

When a return value exists at Step 604, read the first program file in the program file group 10 according to the dependence file 30 (Step 605). Then, search a function calling part of the file opened at Step 605 for a function with the same name as that of the function having the return value at Step 604 (Step 606).

Next, determination is made whether it is a function of the same name (Step 607) to determine whether a return value is substituted for a variable which stores a return value of the function (Step 608).

At Steps 609 and 610, when the results obtained at Steps 607 and 608 are true, determination is made whether a type of return value of the function and a type of variable which stores the return value are the same.

When they differ from each other, give indication to the programmer at Step 611 that the types are different. When either of the results obtained at Steps 607 and 608 is false, skip Steps 609, 610 and 611.

At Steps 612 and 613, search the same program file for the next function calling part to repeat the processing from Steps 607 to 611 until EOF.

Upon detection of EOF at Step 613, determination is made according to the dependence file 30 whether there exists a designated program file to follow (Step 614) and when the file exists, repeat the processing from Steps 606 to 613.

Upon detection of non-existence of a designated program file to follow (Step 615), read the next line of the definition file 20 (Step 616) to repeat the processing from Steps 605 to 616.

Upon detection of non-existence of a line to follow in the definition file 20 (Step 617), finish processing at Step 618.

Such function of estimating a type of function return value and a type of variable which stores the function return value is realized by software to run on a workstation or a personal computer.

As described in the foregoing, checking a type of return value of a function and a type of variable which stores the return value of a function calling part prior to translation by a program translating device such as a compiler and indicating warning to a programmer leads to provision of a programming supporting method with high development efficiency.

Although the present embodiment has been described with respect to programming using C language, it is apparent that the same effect can be obtained by a program translating device such as a compiler for other high-level language that translates functions by a prototype declaration or similar means.

As described in the foregoing, the programming supporting method of the present invention and the device therefor have a file generation step of converting a description for the registration of a function of a function definition part in each of all the plurality of source program files into a description in a prototype declaration format according to a dependence file to set up an external prototype declaration definition file. Therefore, by generating a prototype declaration essential in C language by file generation unit directly from function definition parts existing in a plurality of source files, looking up a function calling part whose return value or argument might mismatch with that of a function definition part and notifying a programmer of the function calling part in question, it is possible to prevent an error in program translation caused by a mismatch among a prototype declaration, a function definition part and a function calling part to reduce load on a programmer and reduce bugs in a program due to mismatch in type, thereby improving reliability of the program.

Although the invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodies within a scope encompassed and equivalents thereof with respect to the feature set out in the appended claims.

## Claims

1. A programming supporting method in which based on a dependence file indicative of dependence of a plurality of divisional source programs, said plurality of source programs are handled as an equivalent to a series of programs, comprising the steps of:
extracting a description for the registration of a function of a function definition part in all of said plurality of source programs according to said dependence file; and
converting said extracted description into a description in a prototype declaration format to generate an external prototype declaration definition file.

2. The programming supporting method as set forth in claim 1, further comprising the steps of:
from among functions described in said external prototype declaration definition file, sequentially extracting a function having a return value, and
detecting a function of the same name as that of said extracted function from a calling part of said function in said plurality of source programs according to said dependence file.

3. The programming supporting method as set forth in claim 1 or 2, wherein
said file generation step including:
a step of opening the first source program in said plurality of source programs,
a step of reading a description of said first source program line by line,
a function determination step of determining whether the read description corresponds to a function or not,
a function line extraction step of, when the read description corresponds to a function, extracting a function line in said source program,
a step of changing said extracted function line into a prototype declaration format, and
a step of registering said function changed into said prototype declaration format at the prototype declaration definition file.

4. The programming supporting method as set forth in any of claims 1 to 3, further comprising the steps of:
reading a description of said external prototype declaration definition file line by line,
determining whether a function described in the read line has a return value or not,
when the determination is made that said function has a return value, searching the function calling part of said source program for a function of the same name as that of said function having the return value,
when a function of the same name exists, determining whether there exists a variable which stores a return value, and
when there exists a variable which stores a return value, estimating whether a type of return value of the function and a type of variable which stores the return value are the same or not.

5. The programming supporting method as set forth in any of claims 1 to 3, further comprising the steps of:
reading a description of said external prototype declaration definition file line by line,
determining whether said read description corresponds to the last line or not,
when said description is not the last line, determining whether a function described in the read line has a return value or not,
when the determination is made that said function has a return value, reading said dependence file,
searching the function calling part of said source program for a function of the same name as that of said function having the return value according to said dependence file,
when a function of the same name exists, determining whether there exists a variable which stores a return value or not,
when there exists a variable which stores a return value, estimating whether a type of return value of the function and a type of variable which stores the return value are the same or not, and
giving warning when said estimation results in that the types are different.

6. The programming supporting method as set forth in claim 1, further comprising the steps of:
from among functions described in said external prototype declaration definition file, sequentially extracting a function having a return value,
detecting a function of the same name as that of said extracted function from a calling part of said function in said plurality of source programs according to said dependence file, and
estimating a type of return value of said detected function and a type of variable which stores a return value.

7. A programming supporting device which handles, based on a dependence file (30) indicative of dependence of a plurality of divisional source programs (10), said plurality of source programs as an equivalent to a series of programs, comprising:
means (40) for extracting a description for the registration of a function of a function definition part in all of said plurality of source programs (10) according to said dependence file (30); and
means (40) for converting said extracted description into a description in a prototype declaration format to generate an external prototype declaration definition file (20).

8. The programming supporting device as set forth in claim 7, further comprising:
means (50) for sequentially extracting, among functions described in said external prototype declaration definition file (20), a function having a return value, and
means (50) for detecting a function of the same name as that of said extracted function from a calling part of said function in said plurality of source programs (10) according to said dependence file (30).

9. The programming supporting device as set forth in claim 7 or 8, wherein
said external prototype declaration definition file generation means (40)
opens the first source program in said plurality of source programs (10),
reads a description of said first source program line by line,
determines whether the read description corresponds to a function or not,
when the read description corresponds to a function, extracts a function line in said source program,
changes said extracted function line into a prototype declaration format, and
registers said function changed into said prototype declaration format at the prototype declaration definition file (20).

10. The programming supporting device as set forth in any of claims 7 to 9, further comprising:
means (50) for reading a description of said external prototype declaration definition file (20) line by line,
means (50) for determining whether a function described in the read line has a return value or not,
means (50) for searching, when the determination is made that said function has a return value, the function calling part of said source program for a function of the same name as that of said function having the return value,
means (60) for determining, when a function of the same name exists, whether there exists a variable which stores a return value, and
means (60) for estimating, when there exists a variable which stores a return value, whether a type of return value of the function and a type of variable which stores a return value are the same or not.

11. The programming supporting device as set forth in any of claims 7 to 9, further comprising:
means (50) for reading a description of said external prototype declaration definition file (20) line by line,
means (50) for determining whether said read description corresponds to the last line or not,
means (50) for determining, when said description is not the last line, whether a function described in the read line has a return value or not,
means (50) for reading said dependence file when the determination is made that said function has a return value,
means (50) for searching the function calling part of said source program for a function of the same name as that of said function having the return value according to said dependence file (30),
means (60) for determining, when a function of the same name exists, whether there exists a variable which stores a return value or not,
means (50) for estimating, when there exists a variable which stores a return value, whether a type of return value of the function and a type of variable which stores the return value are the same or not, and
means (70) for giving warning when said estimation results in that the types are different.

12. The programming supporting device as set forth in claim 7, further comprising:
means (50) for sequentially extracting, from among functions described in said external prototype declaration definition file (20), a function having a return value,
means (50) for detecting a function of the same name as that of said extracted function from a calling part of said function in said plurality of source programs according to said dependence file, and
means (60) for estimating a type of return value of said detected function and a type of variable which stores a return value.

13. A computer readable memory storing a programming supporting program in which based on a dependence file indicative of dependence of a plurality of divisional source programs, said plurality of source programs are handled as an equivalent to a series of programs, said programming supporting program comprising the steps of:
extracting a description for the registration of a function of a function definition part in all of said plurality of source programs according to said dependence file; and
converting said extracted description into a description in a prototype declaration format to generate an external prototype declaration definition file.

14. The computer readable memory as set forth in claim 13, wherein
said programming supporting program further comprising the steps of:
from among functions described in said external prototype declaration definition file, sequentially extracting a function having a return value, and
detecting a function of the same name as that of said extracted function from a calling part of said function in said plurality of source programs according to said dependence file.

15. The computer readable memory as set forth in claim 13 or 14, wherein
said file generation step including:
a step of opening the first source program in said plurality of source programs,
a step of reading a description of said first source program line by line,
a function determination step of determining whether the read description corresponds to a function or not,
a function line extraction step of, when the read description corresponds to a function, extracting a function line in said source program,
a step of changing said extracted function line into a prototype declaration format, and
a step of registering said function changed into said prototype declaration format at the prototype declaration definition file.

16. The computer readable memory as set forth in any of claims 13 to 15, wherein
said programming supporting program further comprises the steps of:
reading a description of said external prototype declaration definition file line by line,
determining whether a function described in the read line has a return value or not,
when the determination is made that said function has a return value, searching the function calling part of said source program for a function of the same name as that of said function having the return value,
when a function of the same name exists, determining whether there exists a variable which stores a return value, and
when there exists a variable which stores a return value, estimating whether a type of return value of the function and a type of variable which stores the return value are the same or not.

17. The computer readable memory as set forth in any of claims 13 to 15, wherein
said programming supporting program further comprises the steps of:
reading a description of said external prototype declaration definition file line by line,
determining whether said read description corresponds to the last line or not,
when said description is not the last line, determining whether a function described in the read line has a return value or not,
when the determination is made that said function has a return value, reading said dependence file,
searching the function calling part of said source program for a function of the same name as that of said function having the return value according to said dependence file,
when a function of the same name exists, determining whether there exists a variable which stores a return value or not,
when there exists a variable which stores a return value, estimating whether a type of return value of the function and a type of variable which stores the return value are the came or not, and
giving warning when said estimation results in that the types are different.

18. The computer readable memory as set forth in claim 13, wherein
said programming supporting program comprises the steps of:
from among functions described in said external prototype declaration definition file, sequentially extracting a function having a return value,
detecting a function of the same name as that of said extracted function from a calling part of said function in said plurality of source programs according to said dependence file, and
estimating a type of return value of said detected function and a type of variable which stores a return value.
